# EUROPÄISCHE PATENTSCHRIFT

(11) **EP 1 138 639 B1**
(45) Veröffentlichungstag und Bekanntmachung des Hinweises auf die Patenterteilung: **17.08.2005**
(21) Anmeldenummer: 00126818.4
(22) Anmeldetag: 07.12.2000
(51) Int. Cl.: C03B 17/04, C03B 17/06, C03C 23/00, C03C 15/00, H01J 9/24, C03C 3/076, C03C 3/091

(54) **Heissformgebungsverfahren zur Herstellung eines Glaskörpers sowie dessen Verwendung**
Method for hotworking for making a glass body and its application
Procédé de travail à chaud pour la fabrication d' un corps en verre et son application

(30) Priorität: 31.03.2000 DE 10016108
(43) Veröffentlichungstag der Anmeldung: 04.10.2001
(73) Patentinhaber: Schott AG, 55122 Mainz (DE)
(72) Erfinder: Ott, Franz, Dr., 95666 Mitterteich (DE); Becker, Otmar, Dr., 63225 Langen (DE); Naumann, Karin, Dr., 55270 Ober-Olm (DE)

(56) Entgegenhaltungen:
- DE-A- 3 426 140
- US-A- 4 228 206
- US-A- 4 717 607
- KIRK-OTHMER: "Encyclopedia of chemical technology,third edition, volume 11" 1978 , JOHN WILEY & SONS , NEW YORK.CHICHESTER.BRISBANE.TORONTO XP002173261 * Seite 826 - Seite 827; Abbildung 3 *

## Beschreibung

Die Erfindung betrifft ein Heißformgebungsverfahren zur Herstellung eines Glaskörpers aus einer Glasschmelze, wobei die Oberfläche des Glaskörpers während der Heißformgebung wenigstens teilweise einer bestimmten Gasatmosphäre ausgesetzt wird, und die Erfindung betrifft eine Verwendung des Glaskörperes.

Für zahlreiche Anwendungen von Glaskörpern, beispielsweise von Glasrohren oder Flachglasscheiben beziehungsweise von den aus den Glaskörpern (den Halbzeugen) ausgeformten Formkörpern ist das Vorhandensein von bestimmten Eigenschaften des Glases, insbesondere von bestimmten Oberflächeneigenschaften des Glases wie z. B. eine hohe chemische Beständigkeit erforderlich.

Glaskörper, die bestimmte Oberflächeneigenschaften benötigen, sind beispielsweise solche
- für Beleuchtungszwecke, z. B. Halogenlampen,
- für Entladungslampen,
- für den chemischen Anlagenbau,
- die für Durchflußmesser für chemische aggressive Medien verwendet werden,
- für analytische Zwecke (z. B. Bürettenröhren, Titrationszylinder, etc.)
- für Reagenzgläser für spezielle Zwecke,
- für Ummantelungen von Meßelektroden in aggressiven Medien,
- die als Komponenten für biotechnologische Reaktoren eingesetzt werden,
- die als Behälter für medizinische Zwecke (z. B. Ampullen, Fläschchen, Spritzenkörper, Zylinderampullen, etc.) verwendet werden,
- für pharmazeutische Primärverpäckungen,
- die als Komponenten für Displayanwendungen eingesetzt werden.

Es ist zwar bekannt, Glaskörper, insbesondere Glasrohre aus Kieselglas (Quarzglas, SiO₂-Glas) als Halbzeuge für die Ausformung von hohlen Formkörpern herzustellen, die beispielsweise eine sehr hohe chemische Beständigkeit aufweisen. Solche Glaskörper sind jedoch wegen des hohen Schmelzpunktes des SiO₂-Glases in der Herstellung sehr aufwendig und teuer; femer lassen sie sich nur mit begrenzter optischer Qualität herstellen und sind als Massenprodukt wenig geeignet. Solche Glaskörper lassen sich weiterhin nur mit sehr speziellen Vorrichtungen umformen, da einerseits die Umformungstemperaturen sehr hoch liegen, andererseits das Temperaturintervall, in dem Umformungen möglich sind, sehr klein ist.

Halbzeug-Glaskörper aus Kieselglas lassen sich daher nicht mit ausreichender Qualität und Wirtschaftlichkeit für Massenanwendungen herstellen.

Deshalb werden für großtechnische Glasprodukte überwiegend niedriger schmelzende Gläser eingesetzt, z. B. Borosilicatgläser oder Kalk-Natron-Gläser. Diese lassen sich vorteilhaft wirtschaftlich herstellen und umformen.

Es sind bereits Verfahren bekannt, die insbesondere die Oberflächen solcher Glaskörper aus niedriger schmelzenden Gläsern verändern.

So sind Heißformgebungsverfahren zur Herstellung von Glaskörpern aus Glasschmelzen bekannt, bei denen die Oberflächen der Glaskörper während der Heißformgebung wenigstens teilweise einer bestimmten Gasatmosphäre ausgesetzt und die Oberflächeneigenschaften dadurch gezielt verändert werden.

Die US 4,717,607 beschreibt ein Verfahren zur Herstellung von Glasrohren, bei dem die Glasoberfläche chemisch ausgelaugt und dadurch verändert wird. Während des Ziehens des Glasrohrs wird dabei die innere Oberfläche des Glasrohrs einer Gasmischung aus einem fluororganischen Gas, z. B. 1,1 - Difluorethan, und einem oxidierenden Gas, z. B. Luft, ausgesetzt. Das durch Verbrennung der Gasmischung freigesetzte Fluor reagiert mit den Alkali- und Erdalkalimetallionen der Glasoberfläche unter Bildung von Alkali- und Erdalkalimetallverbindungen, die anschließend durch das Glasrohr abgeleitet werden.

Des weiteren sind Verfahren bekannt, bei denen die Glasoberfläche chemisch ausgelaugt wird, indem in das noch heiße Glasrohr ein entsprechendes aggressives Gas, typischerweise SO₂ oder HCl-Gas, eingeleitet wird, das zu Oberflächenreaktionen und Reduzierung des Alkaligehaltes in der Oberfläche führt.

Solche entalkalisierende Verfahren sind z. B. beschrieben in H.A. Schaeffer et. al.; Glastechn. Ber. 54 (1981) Nr. 8, S. 247 - 256. Die Nachteile all dieser Verfahren sind, daß überwiegend toxische Gase eingesetzt werden, wobei die Glasoberfläche nach der chemischen Behandlung noch Spuren dieser aggressiven Reaktionsgase enthalten kann und daß die Glasoberflächenstruktur geschädigt wird, was zu einer rauhen Oberfläche und zu aktiven Zentren der Oberflächen führt. Ferner ist die Verwendung solch aggressiver Gase aus Umweltgesichtspunkten und Arbeitsschutzbedingungen ungünstig. Beim Umformen von solch ausgelaugten Glasröhren kann es zum Ablösen von Partikeln aus der porösen, geschädigten Oberfläche kommen. Ferner ist vor der Verwendung der ausgelaugten Glasrohre ein Waschprozeß zur Entfernung der Reaktionsprodukte notwendig. Dieser Waschprozeß macht ein nachfolgendes Trocknen und Entsorgen der Reaktionsprodukte notwendig, d. h. erhöht die Kosten für die Herstellung der Halbzeug-Glasröhren.

In der US 3,314,772 wird ein weiteres Verfahren zum Entalkalisieren von niedrig schmelzendem Glas durch Fluorisieren mittels fluorhaltiger Verbindungen, z. B. wäßriger HF-Lösungen, beschrieben, das die gleichen typischen prinzipiellen Nachteile wie die anderen vorbeschriebenen Verfahren zur Entalkalisierung aufweist.

Um die Nachteile der Entalkalisierungs-Verfahren zu vermeiden, ist es auch bekannt, rohrförmig ausgeformte Glasbehälter aus niedrig schmelzendem Glas, die insbesondere als Verpackung für pharmazeutische Materialien dienen, an ihrer Innenoberfläche mit einer Siliciumoxid (SiO₂)-Schicht zu versehen, die in ihrer Inertheit einer Quarzglasoberfläche gleichkommt (M. Walther, "Packaging of sensitive parenteral drugs in glass containers with a quartz-like surface" aus Pharmaceutical Technology Europe, May 1996, Vol. 8, Nr. 5, Seite 22 - 27.

Die Beschichtung der Innenoberfläche der ausgeformten Glasformkörper erfolgt dabei durch chemische Abscheidung des oxidischen Beschichtungsmaterials aus dessen Gasphase, insbesondere mittels eines vakuum-gestützten Plasma-CVD-Verfahrens (PECVD = Plasma enhanced chemical vapour deposition), im speziellen (DE 296 09 958 U1) mittels eines gepulsten Plasmas (PICVD = Plasma-impuls-chemical-vapour depositon).

Hierzu werden die fertig ausgeformten Behälter, d. h. die Glasformkörper selbst, innen beschichtet. Dadurch muß jeder Glasformbehälter für sich, angepaßt an seine Form, einem aufwendigen Beschichtungsvorgang unterzogen werden.

Neben den Entalkalisierungs-Verfahren sind auch Verfahren bekannt, bei denen während der Heißformgebung eines Glaskörpers aus der Glasschmelze eine dünne Beschichtung auf der Glasoberfläche aufgebracht wird. In der EP 0 501 562 A1 wird ein Verfahren zur Herstellung von Röhrenglas beschrieben, wobei die innere Glasoberfläche während dem Ziehen einer Gasatmosphäre ausgesetzt wird. Die Gasatmosphäre besteht dabei aus einem reaktiven Gas oder einer reaktiven Gasmischung, das im abgekühlten Bereich des Glasrohrs mittels Erzeugung eines Plasmas angeregt und so eine Oberflächenbeschichtung erzeugt. Vorzugsweise werden alkali- und/oder erdalkalifreie Beschichtungen, insbesondere SiO₂-Schichten, aufgebracht.

Der Erfindung liegt nun die Aufgabe zugrunde, Glaskörper aus einer Glasschmelze herzustellen, deren Oberfläche während der Heißformgebung wenigstens teilweise verändert und vergütet und deren Oberflächenzustand oder Oxidationsgrad dadurch gezielt eingestellt werden kann.

Die Lösung dieser Aufgabe gelingt gemäß Patentanspruch 1 mit einem Heißformgebungsverfahren zur Herstellung eines Glaskörpers aus einer Glasschmelze, wobei die Oberfläche des Glaskörpers während der Heißformgebung wenigstens teilweise einer bestimmten Gasatmosphäre ausgesetzt wird, wobei vorgesehen ist, daß eine Gasatmosphäre mit einstell- und regelbarem Sauerstoffgehalt verwendet wird, und dadurch der Oberflächenzustand des Glaskörpers über den einstell- und regelbaren Sauerstoffgehalt der Gasatmosphäre- verändert und eingestellt wird. Es wird keine Oberflächenschicht durch Abscheidung von Komponenten erzeugt.

Für die Ausführung des erfindungsgemäßen Verfahrens eignet sich eine Vorrichtung zur Heißformgebung eines Glaskörpers aus einer Glasschmelze, wobei die Oberfläche des Glaskörpers während der Heißformgebung wenigstens teilweise einer Gasatmosphäre ausgesetzt ist, und die Vorrichtung folgende Mittel aufweist:
- Mittel zur Heißformgebung des Glaskörpers aus einer Glasschmelze,
- Mittel zur Erzeugung der Gasatmosphäre,
- Mittel zur Einstellung und Regelung eines vorbestimmten Sauerstoffgehalts der Gasatmosphäre und
- Mittel zur Führung der Gasatmosphäre wenigstens teilweise entlang wenigstens einer Oberfläche des Glaskörpers.

Dadurch, daß nach dem erfindungsgemäßen Heißformgebungsverfahren die Oberfläche des Glaskörpers während der Heißformgebung wenigstens teilweise einer bestimmten Gasatmosphäre mit einstell- und regelbarem Sauerstoffgehalt ausgesetzt wird, läßt sich der Teil der Oberfläche des Glaskörpers der der Gasatmosphäre ausgesetzt wird, verändern und somit die Oberflächeneigenschaften bzw. der Oberflächenzustand gezielt einstellen. Auf diese Weise ist es mit einfachen Mitteln möglich, die Oberfläche eines Glaskörpers direkt bei der Heißformgebung zu verändern und zu vergüten. Die Oberfläche des Glaskörpers weist dabei je nach eingestelltem Sauerstoffgehalt der Gasatmosphäre einen spezifischen Oberflächenzustand und damit eine bestimmte O-berflächeneigenschaft auf, die im wesentlichen über den Sauerstoffgehalt geregelt und eingestellt werden kann. Neben dem Sauerstoffgehalt der Gasatmospähre spielen im wesentlichen die jeweilige Glaszusammensetzung und die Verarbeitungbedingungen bei der Herstellung des Glaskörpers, wie Temperatur, Zeit, Gasdruck, eine Rolle.

Der Sauerstoffgehalt der Gasatmosphäre wird in einem Bereich von 0 bis 100 Vol.-%, bevorzugt in einem Bereich von 0 bis 80 Vol.-% und besonders bevorzugt in einem Bereich von 10 bis 30 Vol.-% eingestellt und geregelt.

Es hat sich des weiteren als vorteilhaft erwiesen, wenn eine Gasatmosphäre verwendet wird, die neben Sauerstoff weitere Gase, insbesondere Stickstoff, Edelgase, CO₂, SO₂ und/oder H₂O(feuchte oder trockene Atmosphäre), enthält, deren Gehalt ebenfalls eingestellt und geregelt wird. Besonders bevorzugt enthält die Gasatmosphäre neben Sauerstoff im wesentlichen Stickstoff.

Der Oberflächenzustand wird dabei bevorzugt bis zu einer Oberflächentiefe des Glaskörpers von 2000 nm, insbesondere von 1000 nm verändert und eingestellt.

Das erfindungsgemäße Heißformgebungsverfahren eignet sich besonders zur Herstellung von Glaskörperen, bei denen der Glaskörper aus einer Glasschmelze gezogen wird. Vorzugsweise handelt es sich bei dem Glaskörper um ein Glasrohr oder um ein Flachglas das aus einer Glasschmelze gezogen wird, wobei insbesondere die innere Oberfläche des Glasrohrs während des Rohrziehens der Gasatmosphäre ausgesetzt und dadurch verändert wird. Das Flachglas kann dabei bevorzugt vertikal oder horizontal gezogen werden.

Die Glaskörper, insbesondere Glasrohre, werden bei, für die jeweilige Glaszusammensetzung typischen Verarbeitungstemperaturen und Viskositäten, insbesondere bei Viskositäten die im Bereich von 10⁴ bis 10⁵ dPas liegen, geformt und hergestellt.

Insbesondere Glaskörper die aus einer über 1000 °C heißen, bevorzugt aus einer über 1200 °C heißen Glasschmelze geformt werden, lassen sich nach dem erfindungsgemäßen Verfahren vorteilhaft herstellen.

So hat es sich gezeigt, daß erfindungsgemäß besonders Glaskörperen aus einer Borosilicat-, einer Neutral- oder einer Aluminosilicatglasschmelze hergestellt und heißgeformt werden können, wobei sich die Oberfläche über den Sauerstoffgehalt vorteilhaft vergüten und verändern läßt.

Bevorzugt wird dabei eine Aluminosilicat-Glasschmelze der Zusammensetzung (in Gew.-% auf Oxidbasis)
SiO₂ 40 - 75, Al₂O₃ 10 - 27, B₂O₃ 0 -1 5, MgO 0 - 10, CaO 0 - 12, SrO 0 - 12, BaO 0 - 30, ZnO 0 - 10, ZrO₂ 0 - 5, TiO₂ 0 - 5,5, P₂O₅ 0 - 9
heißgeformt und deren Oberfächenzustand eingestellt.

Ebenfalls als besonders geeignet, haben sich Aluminosilicatglasschmelzen folgender Zusammensetzung (in Gew.-% auf Oxidbasis) erwiesen:
SiO₂ 46 - 64, Al₂O₃ 12 - 26, B₂O₃ 0 - 5,5, MgO 0 - 7, CaO 3 -14, SrO 0 -11, BaO 6 - 25, ZrO₂ 0 - 5, TiO₂ 0 - 0,5 und P₂O₅ 0 - 9.
SiO₂ > 55 - 64, Al₂O₃ 13 - 18, B₂O₃ 0 - 5,5, MgO 0 - 7, CaO 5 -14, SrO 0 - 8, BaO 6 -17, ZrO₂ 0 - 2 und TiO₂ 0 - 0,5.
SiO₂ 59 - 62, Al₂O₃ 13,5 - 15,5, B₂O₃ 3 - 5,5, MgO 2,5 - 5, CaO 8,2 - 10,5, BaO 8,5 - 9,5, ZrO₂ 0 -1,5 und TiO₂ 0 - 0,5.
SiO₂ > 58 - 62, Al₂O₃ 14 - 17,5, B₂O₃ 0 - 1, MgO 0 - 7, CaO 5,5 - 14, SrO 0 - 8, BaO 6 - 17, ZrO₂ 0 -1,5 und TiO₂ 0 - 0,5.
SiO₂ > 58 - 62, Al₂O₃ 15 - 17,5, B₂O₃ 0,2 - 0,7, MgO 0 - < 1, CaO 5,5 - 14, SrO 0 - 8, BaO 6 - 10, ZrO₂ 0,05 - 1 und TiO₂ 0 - 0,5.
SiO₂ 46 - 63, Al₂O₃ 12 - 25, MgO 0 - 5, CaO 3 - 14, SrO 0 -11, BaO 6 - 15, mit MgO + CaO +SrO + BaO ≤ 25, mit SrO + BaO ≥ 10, Zr02 0,1 - 5 und P₂O₅ 0,1 - 9.

Geeignete Boroslicat- oder Neutralglasschmelzen finden sich im Zusammensetzungsbereich (in Gew.-% auf Oxidbasis):
SiO₂ 60 - 80, Al₂O₃ 2 - 10, B₂O₃ 5 - 20, MgO 0 - 8, CaO 0 - 12, SrO 0 - 8, BaO 0 - 12, ZnO 0 -10, ZrO₂ 0 - 5 und Li₂O + Na₂O + K₂O 2 - 12.

Die Glasschmelzen können zusätzlich bekannte Läutermittel, z. B. Sb₂O₃, SnO₂, MoO₃, Sulfat, As₂O₃, sowie färbende Komponenten, insbesondere Fe₂O₃ (bevorzugt 0,02 bis 0,2 Gew.-%), in üblichen Mengen enthalten.

Insbesondere bei sehr hohen Verarbeitungstemperaturen der Glasschmelze und/oder einem hohen Sauerstoffgehalt der Gasatmosphäre ist darauf zu achten, daß die Mittel zur Führung der Gasatmosphäre einer Temperatur von über 1200 °C, insbesondere einer Temperatur von über 1400 °C standhalten. Dabei hat es sich als zweckmäßig erwiesen, wenn die Mittel zur Heißformgebung des Glaskörpers und/oder die Mittel zur Führung der Gasatmosphäre wenigstens teilweise, insbesondere im besonders temperaturbelasteten Bereichen, mit Platin oder einer platinhaltigen Legierung oder sonstigen Refraktärmetallen oder deren Legierungen überzogen sind oder daraus bestehen.

Bei der Vorrichtung handelt es sich bevorzugt um ein Teil einer Ziehanlage, insbesondere einen Teil einer Rohrziehanlage oder einen Teil einer Flachglasziehanlage.

Das erfindungsgemäße Verfahren kann auf alle Rohrziehverfahren angewendet werden, die ein Ziehwerkzeug verwenden, welches zur Formung des Glaskörpers, insbesondere zur Formung des Rohrhohlraumes dient bzw. diese unterstützt. Es handelt sich hierbei um an sich bekannte und bewährte Rohrziehverfahren, von denen die gebräuchlichsten kurz skizziert werden sollen:

Beim Danner-Verfahren dient als Ziehwerkzeug ein leicht schräg gestelltes, langsam rotierendes Keramikrohr, die Danner-Pfeife, auf die ein kontinuierlicher Strang von Glasschmelze aufläuft. Am tieferen Ende der Pfeife, dem Pfeifenkopf, wird das Glas abgezogen, wobei durch Zuführung eines Gases, insbesondere von Luft durch die Hohlwelle der Pfeife eine Ziehzwiebel entstehet. Das horizontal abgezogene Glasrohr durchläuft eine Rollenbahn bis zur Ziehmaschine, hinter der der endlose Strang in Rohrabschnitte getrennt wird.

Eine solche Vorrichtung zum Rohrziehen nach Danner weist weiterhin eine Düse auf, aus der das Glas aus der Speiserrinne auf die Pfeife läuft. Weiter besitzt sie einen Ofen, beispielsweise einen gasbeheizten Muffelofen, zur Einstellung eines Temperaturgradienten zwischen dem Auslauf aus der Düse und dem Pfeifenende sowie eine Blasvorrichtung zur Beaufschlagung des Innenraumes des abzuziehenden Glasrohres mit einem Über- oder Unterdruck gegenüber dem Umgebungsdruck.

Beim Vello-Verfahren fließt die Glasschmelze bereits in Rohrform aus dem Speiser, da sie durch einen ringförmigen Spalt austritt. Die Schmelze fließt über einen Dorn, die Vello-Nadel, das entsprechende Ziehwerkzeug dieses Verfahrens. Hier wird das Glas zum Rohr geformt. Auch hier wird durch den hohlen Nadelschaft Luft geblasen, um ein Spektrum von unterschiedlichen Rohrabmessungen zu erhalten. Das Rohr fließt zunächst senkrecht nach unten, wird dann in die Waagerechte umgelenkt und wie beim Danner-Verfahren über eine Rollenbahn abgezogen, gekühlt und zugeschnitten.

Auch beim A-Zug-Verfahren (Down-draw-Verfahren) fließt die Glasschmelze bereits in Rohrform aus dem Speiser, da sie durch einen ringförmigen Spalt austritt. Sie fließt über das Ziehwerkzeug, einen Dorn, hier die A-Zug-Nadel, wo das Glas zum Rohr geformt wird. Bei diesem Verfahren kann ebenfalls mit einem Gas gearbeitet werden. Das Rohr wird senkrecht nach unten gezogen und wird ohne Umlenken bei Temperaturen von ca. 300 °C in Rohrabschnitte getrennt.

Bevorzugt finden die erfindungsgemäß hergestellten Glaskörpers Verwendung für die Herstellung von Lampenkolben, insbesondere für die Herstellung von hochbelasteten Halogenlampenkolben, für die Herstellung von Behältnissen, insbesondere von pharmazeutischen Primärverpackungen.

Im folgenden wird die Erfindung anhand der Figuren und der Ausführungsbeispiele weiter erläutert:

Figuren:
- Figur 1: zeigt schematisch den Aufbau einer Vorrichtung, die Teil einer Rohrziehanlage nach Vello ist.
- Figur 2: zeigt schematisch das untere Ende der Ziehnadel nach Figur 1
- Figur 3: zeigt die Natriumionen-Konzentration in Abhängigkeit von der Oberflächentiefe sowie vom Sauerstoffgehalt der Gasatmosphäre eines erfindungsgemäß hergestellten Glaskörpers der eine Stunde bei 680 °C getempert wurde

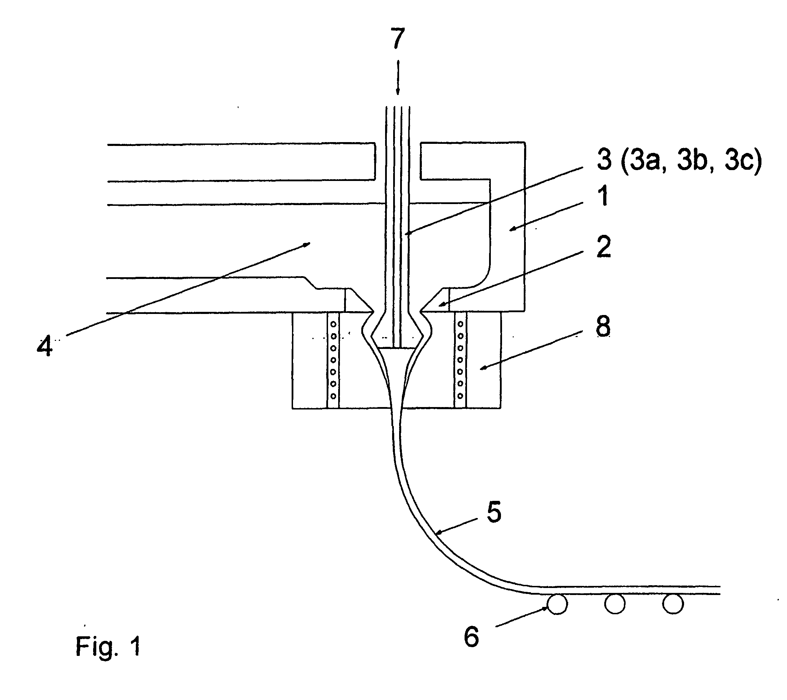

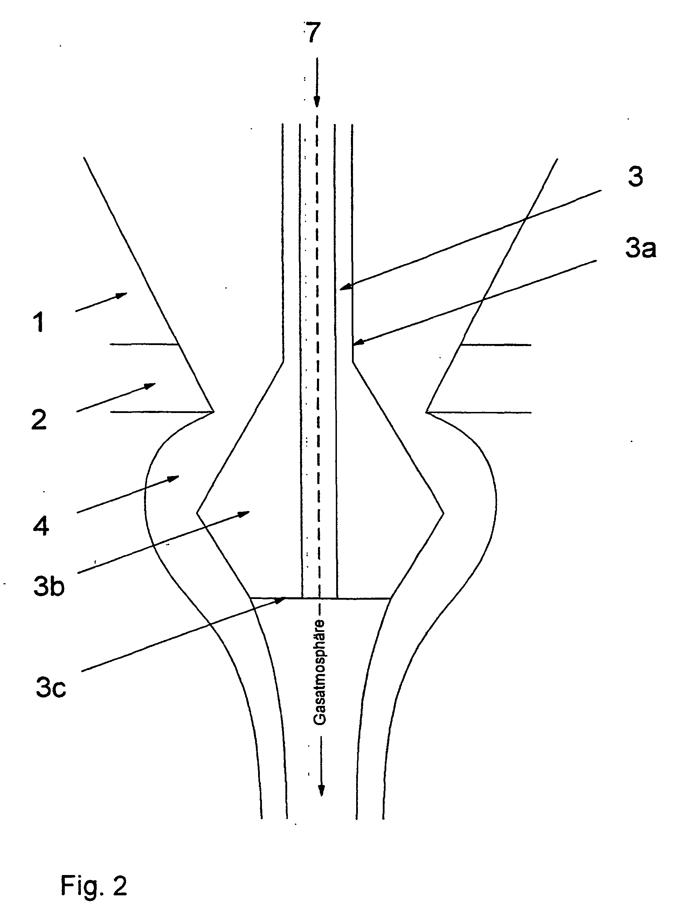

Die Vorrichtung gemäß Figur 1 bzw. Figur 2 ist dabei folgendermaßen aufgebaut:

Am Boden eines Speiserkopfs (1) sitzt ein Auslaufring (2). Zentrisch in diesem Ring befindet sich die Rohrziehnadel (3). Die Nadel besteht aus einem langen Schaft (3a), dessen unteres Ende nach unten konisch erweitert ist. Dieser Konus, der Nadelkopf (3b), befindet sich knapp unterhalb des Auslaufrings. Der Nadelschaft ist zur Führung der Gasatmosphäre (7) hohl, so daß die Gasatmosphäre durchgeblasen werden kann. Die Nadel kann in horizontaler und vertikaler Richtung verfahren werden. Nadel und Ring sind mit Pt verkleidet bzw. überzogen, wobei die Nadel sowohl an deren äußeren, mit der Glasschmelze in Berührung stehenden Seite, als auch an deren inneren, mit der Gasatmosphäre in Berührung stehenden Seite, mit Pt verkleidet ist.

Die Glasschmelze (4) fließt durch den Ringspalt zwischen Nadel (3) und Ring (2) und breitet sich über den konischen Nadelkopf (3b) aus. Vom Rand des Nadelkopfs, der Abreißkante (3c), fließt es nach unten und bildet eine Zwiebel aus. Der so entstandene hohle Strang (5) wird vor dem Erstarren im freien Durchhang in die horizontale Richtung umgebogen und über Rollen oder Graphitklötze (6) mit einer Ziehmaschine abgezogen. Der Gasdruck der Gasatmosphäre (7) kann eingestellt werden, so daß in Verbindung mit unterschiedlichen Ziehgeschwindigkeiten der zu verarbeitenden Glasmenge ein breites Abmessungsspektrum hergestellt werden kann.

Des weiteren weist die Vorrichtung Mittel zur Erzeugung und Regulierung der Gasatmosphäre, beispielsweise Druckgasbehälter und Ventile, sowie Mittel zur Einstellung und Regelung des Sauerstoffgehalts der Gasatmosphäre auf. Je nach Sauerstoffgehalt der Gasatmosphäre läßt sich dabei der Oberflächenzustand und damit die Oberflächeneigenschaften des Glasrohrs direkt beim Ziehen verändern und gezielt einstellen.

Der Formgebungsbereich befindet sich innerhalb einer beheizten Muffel (8). Auch ein Teil des Durchhangs ist abgeschirmt und vor Zugluft geschützt. Zur Verbesserung der thermischen und chemischen Homogenität des Glases kann um die Nadel herum ein Drehrohr laufen. Bei geeigneter Konstruktion und Beheizung der Speiserrinne kann das Glas am Ende des Speisers bis auf wenige Grad thermisch homogenisiert werden. In diesem Fall übertrifft das Vello-Verfahren das Danner-Verfahren im Hinblick auf die Maßgenauigkeit der gezogenen Rohre.

Wie alle Ziehverfahren arbeitet auch das Vello-Verfahren in einem charakteristischen Viskositätsbereich. Dieser liegt bei 10⁴ bis 10⁵ dPas. Die Auslegung des Ziehwerkzeugs, des Feeders, der Beheizung etc. kann daher a priori für jede Glasart angegeben werden.

Neben dem Nadeldurchmesser, dem Durchsatz und der Viskosität sind wichtige Prozeßparameter der Gasdruck und der Sauerstoffgehalt der Gasatmosphäre, die Ziehgeschwindigkeit und die Durchhanghöhe.

Die Durchhanghöhe kann als Mittel zur Leistungssteigerung benützt werden. Da der Glasstrang in einem bestimmten Viskositätsbereich auf der Ziehbahn aufsetzen muß, um nicht krumm (zu kalt) oder oval (zu heiß) zu werden, kann man mit einem hohen Durchhang größere Durchsätze verarbeiten. Eine Steigerung des Durchsatzes setzt die Vergrößerung des Ziehwerkzeugs voraus. Das Ausziehen der Zwiebel erfolgt im Gegensatz zum Danner-Verfahren zu einem wesentlichen Anteil durch ihr Eigengewicht.

### Ausführungsbeispiele:

Mit Hilfe des Vello-Verfahrens wurden mit einer Vorrichtung gemäß Figur 1 bzw. Figur 2 Glasrohre aus einer Glasschmelze, die in folgendem Zusammensetzungsbereich (in Gew.-% auf Oxidbasis) liegt, hergestellt: SiO₂ > 55 - 64, Al₂O₃ 13 - 18, B₂O₃ 0 - 5,5, MgO 0 - 7, CaO 5 - 14, SrO 0 - 8, BaO 6 - 17, ZrO₂ 0 - 2 und TiO₂ 0 - 0,5 sowie Läutermittel in den üblichen Mengen.

Beim Ziehen der Glasrohre wurde bei ansonsten konstanten Ziehparametern nur der Sauerstoffgehalt der Blas-Gasatmosphäre geändert und so der Ober flächenzustand der Innenseite des Glasrohrs verändert und gezielt eingestellt. Es wurde eine Gasatmosphäre die im wesentlichen Stickstoff enthält (O₂ - Gehalt 0 Vol. - %) und eine Gasatmosphäre die im wesentliches Stickstoff und 21 Vol. - % Sauerstoff enthält zum Blasen der Glasrohre verwendet.

Die so hergestellten Glasrohre finden bevorzugt Verwendung für die Herstellung von hochtemperaturbelasteten Halogenlampenkolben. Um den Einfluß der unterschiedlichen Gasatmosphäre (N₂, Luft) auf die oberflächennahen Schichten analytisch nachweisbar zu machen, wurden die gezogenen Glasrohre im Labor 1 Stunde bei 680 °C mit einer Luftfeuchtigkeit von 1 Vol.-% H₂O getempert und anschließend mit SIMS untersucht.

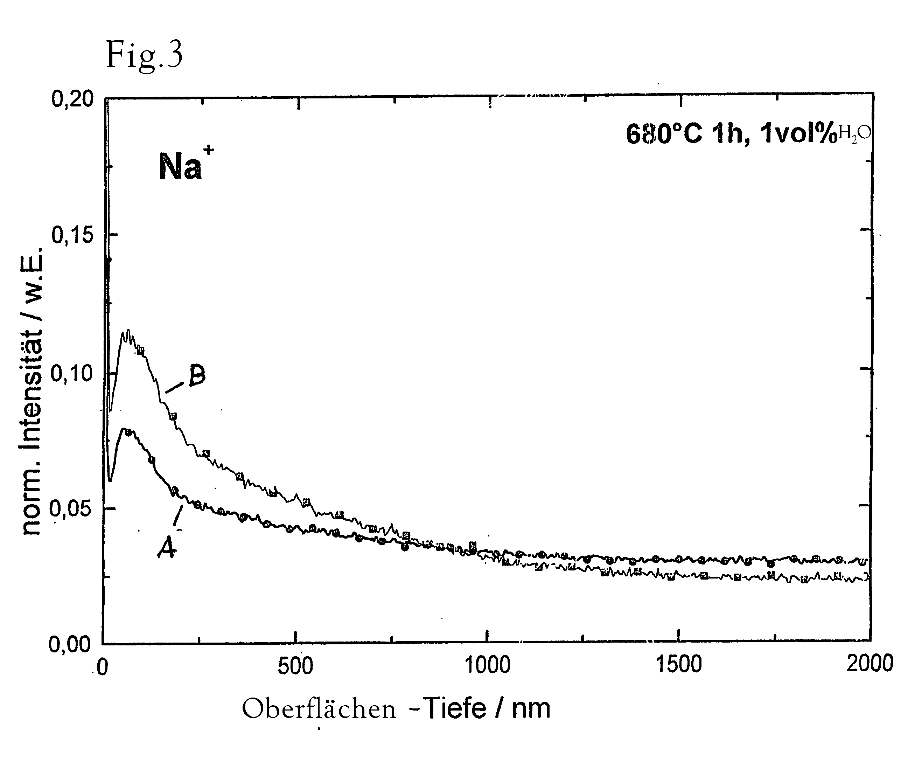

Die Bestimmung der Natriumionen-Konzentration mittels SIMS in Abhängigkeit von der Oberflächentiefe lieferte überraschenderweise folgendes Ergebnis (siehe Figur 3):

Die Anreicherung von Natriumionen an der Oberfläche der getemperten Glasrohre ist bis zu einer Oberflächentiefe von etwa 750 nm für die mit 21 Vol.-% Sauerstoff geblasenen Glasrohre viel geringer (Kurve A) als für die im wesentlichen ohne Sauerstoff geblasenen Glasrohre (Kurve B). Diese Meßergebnisse zeigen eindeutig, daß der Oberflächenzustand des Glasrohrs über den einstell- und regelbarem Sauerstoffgehalt die Gasatmosphäre verändert und eingestellt werden kann. Je höher beispielsweise der Sauerstoffgehalt der Gasatmosphäre, desto geringer ist die zu erwartende Anreichung von Natriumionen an der äußersten Glasoberfläche.

Dieses überraschende Ergebnis ist von besonderer Bedeutung für die Verwendung der nach dem Ausführungsbeispiel hergestellten Glasrohre zur Herstellung von Halogenlampenkolben. Solche Glasrohre müssen zumindest an ihrer Oberfläche im wesentlichen alkalioxid-frei sein, da Alkaliionen den regenerativen Halogenkreislauf der Lampe stören.

Im Betrieb der Lampe bildet sich nämlich aus dem Wolframdampf von der Wendel und der Halogen-Inertgas-Mischung ein Gleichgewicht zwischen Bildung und Zerfall von Wolfram-Halogeniden. Dabei findet die Zerfallsreaktion bei höheren Temperaturen als die Bildungsreaktion statt, so daß sich das Wolfram wieder auf der Wendel abscheidet. Wird dieser Kreislauf durch verunreinigende Komponenten wie beispielsweise Alkaliionen gestört, scheidet sich das Wolfram statt auf der Wendel auf der Glaskolbeninnenseite als schwarz glänzender störender Belag ab, die Lampe wird unbrauchbar.

Zur sogenannten Schwärzung in Wolfram-Halogen-Lampen kommt es, weil sich durch Reaktionen des Halogengases mit dem Glas die zur Aufrechterhaltung des Halogenkreislaufes notwendige Menge Halogengas so weit verringert, daß der Halogenkreislauf zusammenbricht und Wolfram sich statt auf der Wendel auf der Glasinnenseite als schwarzer Belag abscheidet. Ist die sogenannte Reaktionsfähigkeit des Glases aber verringert, kann weniger Halogengas mit dem Glas reagieren und beispielsweise diffundiert weniger Chlorid aus der Halogengasfüllung ins Glas ein. Damit wird dem Halogenkreislauf weniger Halogengas entzogen und die Schwärzung der Lampe durch Wolframabscheidung auf der Glasinnenseite wird unterdrückt. Diese Unterdrückung der sogenannten Schwärzung kann eindeutig durch Lampentestergebnisse belegt werden.

Aus dem in der Produktion mit unterschiedlichen Gasatmosphären (N₂, Luft) gezogenen Glasrohren wurden Halogenlampen hergestellt. Diese wurden unter identsichen Brennbedingungen getestet. Dabei zeigte sich, daß die Brennzeit bis zur Schwärzung von ca. 100 Stunden auf das 1,5 - 2 fache gesteigert werden kann, wenn die Glasrohre statt mit N₂ mit Luft gezogen werden.

Es wurden durch den jeweiligen Sauerstoffgehalt der Gasatmosphäre die freien Valenzen der während der Heißformgebung gebildeten Glasoberfläche beeinflußt und dadurch der Oberflächenzustand verändert und je nach Sauerstoffgehalt gezielt eingestellt.

Folgende Beeinflussung bzw. Veränderung des Oberflächenzustand eines Glaskörpers sind dabei denkbar:
- Beeinflussung der Glasstruktur der Oberfläche
- Beeinflussung der Oberflächenaktivität des Glases
- Veränderung des Oberflächenzustandes im Vergleich zum Volumen
- Veränderung der Bindungsverhältnisse an der Oberfläche im Vergleich zum Volumen
- Beeinflussung und gezielte Einstellung des Oxidationsgrades der Oberfläche
- Bildung einer dünnen speziellen Zusammensetzung als Schicht auf der Oberfläche durch Wechselwirkung der heißen Glasschmelze mit der Gasatmosphäre
- Bildung reaktiver Glasoberflächen
- Beeinflussung der Glasoberflächen in Abhängigkeit von der Temperatur
- Gezielte Einstellung chem. und phys. Eigenschaften der Glasoberfläche
- Veränderung der Eigenschaften der Glasoberfläche im Vergleich zum Bulk-Material
- Polarisierung der Oberfläche
- lonentransport durch kontrollierte Gaszusammensetzungen fördern oder unterbinden
- Erzeugung diffusionsgehemmter Schichten (sogenannter Sperrschichten)

Mit dem Verfahren gemäß der Erfindung gelingt es also, Glaskörper zur Verfügung zu stellen, deren Oberfläche verändert und vergütet ist, so daß sie beispielsweise als Halbzeug für Glasformkörper geeignet sind, an die hohe Anforderungen bezüglich ihre Oberflächeneigenschaften wie z. B. der chemischen Beständigkeit oder Reaktionsfähigkeit ihrer Oberfläche gestellt werden.

Die nach den erfindungsgemäßen Verfahren hergestellten Glasrohre sind also hervorragend geeignet, verwendet zu werden beispielsweise für die Herstellung von
- Lampenkolben, insbesondere Lampenkolben für Halogenlampen,
- Behälter für medizinische Zwecke wie Ampullen, Fläschchen, Spritzenkörpern, Zylinderampullen; pharmazeutische Primärverpackungen,
- Reagenzgläsern, Büretten, Pipetten, Titrationszylindern,
- röhrenförmigen Teilen für den chemischen Anlagenbau.

Da bei den erfindungsgemäßen Verfahren die vergüteten Glaskörper kontinuierlich und ohne zusätzlichen Prozeßschritt, verglichen mit der Herstellung nicht-vergüteter Glasrohre, hergestellt werden, ist dies ein sehr einfaches und wirtschaftliches Verfahren, verglichen mit den bisherigen Verfahren wie dem Auslaugen der inneren Oberfläche von Glasrohren oder gar dem Innenbeschichten von hohlen Glasformkörpern.

### Bezugszeichenliste

- 1): Speiserkopf
- 2): Auslaufring
- 3): Rohrziehnadel
- 3a): Nadelschaft
- 3b): Nadelkopf
- 3c): Abreißkante
- 4): Glasschmelze
- 5): Glasrohr
- 6): Rollen
- 7): Gasatmosphäre
- 8): Muffel

## Patentansprüche

1. Heißformgebungsverfahren zur Herstellung eines Glaskörpers aus einer Glasschmelze, wobei die Oberfläche des Glaskörpers während der Heißformgebung wenigstens teilweise einer bestimmten Gasatmosphäre ausgesetzt wird,
**dadurch gekennzeichnet,**
**daß** eine Gasatmosphäre mit einstell- und regelbarem Sauerstoffgehalt verwendet wird, wobei der Oberflächenzustand des Glaskörpers über den einstell- und regelbaren Sauerstoffgehalt der Gasatmosphäre verändert und eingestellt wird.

2. Heißformgebungsverfahren nach Anspruch 1,
**dadurch gekennzeichnet,**
**daß** der Sauerstoffgehalt der Gasatmosphäre im Bereich von 0 bis 100 Vol.-% eingestellt und geregelt wird.

3. Heißformgebungsverfahren nach Anspruch 2,
**dadurch gekennzeichnet,**
**daß** der Sauerstoffgehalt der Gasatmosphäre im Bereich von 0 bis 80 Vol.-% eingestellt und geregelt wird.

4. Heißformgebungsverfahren nach Anspruch 3,
**dadurch gekennzeichnet,**
**daß** der Sauerstoffgehalt der Gasatmosphäre im Bereich von 10 bis 30 Vol.-% eingestellt und geregelt wird.

5. Heißformgebungsverfahren nach wenigstens einem der Ansprüche 1 bis 4,
**dadurch gekennzeichnet,**
**daß** die Gasatmosphäre, die neben Sauerstoff weitere Gase, insbesondere Stickstoff, Edelgase, CO₂, SO₂ und/oder H₂O, enthält, deren Gehalt ebenfalls eingestellt und geregelt wird.

6. Heißformgebungsverfahren nach wenigstens einem der Ansprüche 1 bis 5,
**dadurch gekennzeichnet,**
**daß** der Oberflächenzustand bis zu einer Oberflächentiefe des Glaskörpers von 2000 nm, insbesondere von 1000 nm verändert und eingestellt wird.

7. Heißformgebungsverfahren nach wenigstens einem der Ansprüche 1 bis 6,
**dadurch gekennzeichnet,**
**daß** der Glaskörper aus einer Glasschmelze gezogen wird.

8. Heißformgebungsverfahren nach Anspruch 7,
**dadurch gekennzeichnet,**
**daß** ein Glasrohr aus einer Glasschmelze gezogen wird.

9. Heißformgebungsverfahren nach Anspruch 8,
**dadurch gekennzeichnet,**
**daß** die innere Oberfläche des Glasrohrs während des Rohrziehens der Gasatmosphäre ausgesetzt wird.

10. Heißformgebungsverfahren nach wenigstens einem der Ansprüche 1 bis 7,
**dadurch gekennzeichnet,**
**daß** ein Flachglas aus einer Glasschmelze gezogen wird.

11. Heißformgebungsverfahren nach wenigstens einem der Ansprüche 1 bis 10,
**dadurch gekennzeichnet,**
**daß** der Glaskörper aus einer Glasschmelze, deren Viskosität im Bereich von 10⁴ bis 10⁵ dPas liegt, geformt wird.

12. Heißformgebungsverfahren nach wenigstens einem der Ansprüche 1 bis 11,
**dadurch gekennzeichnet,**
**daß** der Glaskörper aus einer über 1000 °C heißen, insbesondere aus einer über 1200 °C heißen Glasschmelze geformt wird.

13. Heißformgebungsverfahren nach wenigstens einem der Ansprüche 1 bis 12,
**dadurch gekennzeichnet,**
**daß** der Glaskörper aus einer Borosilicat-, einer Neutral- oder einer Aluminosilicatglasschmelze geformt wird.

14. Heißformgebungsverfahren nach wenigstens einem der Ansprüche 1 bis 12,
**dadurch gekennzeichnet,**
**daß** der Glaskörper aus einer Glasschmelze der Zusammensetzung (in Gew.-% auf Oxidbasis):
| | |
|---|---|
| SiO₂ | 40 - 75 |
| Al₂O₃ | 10 - 27 |
| B₂O₃ | 0 - 15 |
| MgO | 0 - 10 |
| CaO | 0 - 12 |
| SrO | 0 - 12 |
| BaO | 0 - 30 |
| ZnO | 0 - 10 |
| ZrO₂ | 0 - 5 |
| Li₂O + Na₂O + K₂O | 0 - 7 |
| TiO₂ | 0 - 5,5 |
| P₂O₅ | 0 - 9,0 |
sowie ggf. Läutermittel und färbende Komponenten in üblichen Mengen, geformt wird.

15. Heißformgebungsverfahren nach wenigstens einem der Ansprüche 1 bis 12,
**dadurch gekennzeichnet,**
**daß** die Glaskörper aus einer Glasschmelze der Zusammensetzung (in Gew.-% auf Oxidbasis):
| | |
|---|---|
| SiO₂ | 60 - 80 |
| Al₂O₃ | 2 - 10 |
| B₂O₃ | 5 - 20 |
| MgO | 0 - 8 |
| CaO | 0 - 12 |
| SrO | 0 - 8 |
| BaO | 0 - 12 |
| ZnO | 0 - 10 |
| ZrO₂ | 0 - 5 |
| Li₂O + Na₂O + K₂O | 2 - 12 |
sowie gegebenenfalls Läutermittel und färbende Komponenten in üblichen Mengen, geformt sind.

16. Verwendung des nach dem Heißformgebungsverfahren gemäß wenigstens einem der Ansprüche 1 bis 15 hergestellten Glaskörpers für die Herstellung von Lampenkolben für Halogenlampen.

17. Verwendung des nach dem Heißformgebungsverfahren nach wenigstens einem der Ansprüche 1 bis 15 bis hergestellten Glaskörpers für die Herstellung von Behältnissen als Primärverpackung für pharmazeutische Produkte.

## Claims

1. Hot-shaping process for producing a glass body from a glass melt, the surface of the glass body at least in part being exposed to a defined gas atmosphere during the hot shaping, **characterized in that** a gas atmosphere with an oxygen content which can be set and controlled is used, the surface state of the glass body being altered and set by means of the settable and controllable oxygen content of the gas atmosphere.

2. Hot-shaping process according to Claim 1, **characterized in that** the oxygen content of the gas atmosphere is set and controlled in the range from 0 to 100% by volume.

3. Hot-shaping process according to Claim 2, **characterized in that** the oxygen content of the gas atmosphere is set and controlled in the range from 0 to 80% by volume.

4. Hot-shaping process according to Claim 3, **characterized in that** the oxygen content of the gas atmosphere is set and controlled in the range from 10 to 30% by volume.

5. Hot-shaping process according to at least one of Claims 1 to 4, **characterized in that** the gas atmosphere, in addition to oxygen, contains further gases, in particular nitrogen, noble gases, CO₂, SO₂ and/or H₂O, the levels of which are likewise set and controlled.

6. Hot-shaping process according to at least one of Claims 1 to 5, **characterized in that** the surface state is altered and set down to surface depth of the glass body of 2000 nm, in particular of 1000 nm.

7. Hot-shaping process according to at least one of Claims 1 to 6, **characterized in that** the glass body is drawn from a glass melt.

8. Hot-shaping process according to Claim 7, **characterized in that** a glass tube is drawn from a glass melt.

9. Hot-shaping process according to Claim 8, **characterized in that** the inner surface of the glass tube is exposed to the gas atmosphere during the tube drawing.

10. Hot-shaping process according to at least one of Claims 1 to 7, **characterized in that** a flat glass is drawn from a glass melt.

11. Hot-shaping process according to at least one of Claims 1 to 10, **characterized in that** the glass body is shaped from a glass melt whereof the viscosity is in the range from 10⁴ to 10⁵ dPas.

12. Hot-shaping process according to at least one of Claims 1 to 11, **characterized in that** the glass body is shaped from a hot glass melt at a temperature of over 1000°C, in particular over 1200°C.

13. Hot-shaping process according to at least one of Claims 1 to 12, **characterized in that** the glass body is shaped from a borosilicate glass melt, a neutral glass melt or an aluminosilicate glass melt.

14. Hot-shaping process according to at least one of Claims 1 to 12, **characterized in that** the glass body is shaped from a glass melt having a composition (in % by weight, based on oxide) of:
| | |
|---|---|
| SiO₂ | 40 - 75 |
| Al₂O₃ | 10 - 27 |
| B₂O₃ | 0 - 15 |
| MgO | 0 - 10 |
| CaO | 0 - 12 |
| SrO | 0 - 12 |
| BaO | 0 - 30 |
| ZnO | 0 - 10 |
| ZrO₂ | 0 - 5 |
| Li₂O + Na₂O + K₂O | 0 - 7 |
| TiO₂ | 0 - 5.5 |
| P₂O₅ | 0 - 9.0 |
and if appropriate refining agents and colouring components in standard quantities.

15. Hot-shaping process according to at least one of Claims 1 to 12, **characterized in that** the glass bodies are shaped from a glass melt having a composition (in % by weight, based on oxide) of:
| | |
|---|---|
| SiO₂ | 60 - 80 |
| Al₂O₃ | 2 - 10 |
| B₂O₃ | 5 - 20 |
| MgO | 0 - 8 |
| CaO | 0 - 12 |
| SrO | 0 - 8 |
| BaO | 0 - 12 |
| ZnO | 0 - 10 |
| ZrO₂ | 0 - 5 |
| Li₂O + Na₂O + K₂O | 2 - 12 |
and if appropriate refining agents and colouring components in standard quantities.

16. Use of the glass body produced by the hot shaping process according to at least one of Claims 1 to 15 for the production of lamp bulbs for halogen lamps.

17. Use of the glass body produced by the hot shaping process according to at least one of Claims 1 to 15 for the production of containers as primary packaging for pharmaceutical products.

## Revendications

1. Procédé de façonnage à chaud en vue de la préparation d'un corps en verre à partir de verre en fusion, la surface du corps en verre étant exposée au moins en partie à une atmosphère gazeuse définie pendant le façonnage à chaud,
**caractérisé en ce que** l'on utilise une atmosphère gazeuse dont la teneur en oxygène est réglable et régulable, l'état de surface du corps en verre étant modifié et ajusté par l'intermédiaire de la teneur en oxygène réglable et régulable de l'atmosphère gazeuse.

2. Procédé de façonnage à chaud selon la revendication 1, **caractérisé en ce que** la teneur en oxygène de l'atmosphère gazeuse est réglée et régulée dans la plage de 0 à 100 % en volume.

3. Procédé de façonnage à chaud selon la revendication 2, **caractérisé en ce que** la teneur en oxygène de l'atmosphère gazeuse est réglée et régulée dans la plage de 0 à 80 % en volume.

4. Procédé de façonnage à chaud selon la revendication 3, **caractérisé en ce que** la teneur en oxygène de l'atmosphère gazeuse est réglée et régulée dans la plage de 10 à 30 % en volume.

5. Procédé de façonnage à chaud selon au moins l'une des revendications 1 à 4, **caractérisé en ce que** l'atmosphère gazeuse contient en plus de l'oxygène d'autres gaz et en particulier de l'azote, des gaz rares, du CO₂, du SO₂ et/ou H₂O dont la teneur est également réglée et régulée.

6. Procédé de façonnage à chaud selon au moins l'une des revendications 1 à 5, **caractérisé en ce que** l'état de surface est modifié et ajusté dans la surface du corps en verre jusqu'à une profondeur de 2 000 nm et en particulier de 1 000 nm.

7. Procédé de façonnage à chaud selon au moins l'une des revendications 1 à 6, **caractérisé en ce que** le corps en verre est étiré d'un bain de verre en fusion.

8. Procédé de façonnage à chaud selon la revendication 7, **caractérisé en ce qu'**un tube en verre est étiré d'un bain de verre en fusion.

9. Procédé de façonnage à chaud selon la revendication 8, **caractérisé en ce que** la surface inférieure du tube de verre est exposée à l'atmosphère gazeuse pendant l'étirage du tube.

10. Procédé de façonnage à chaud selon au moins l'une des revendications 1 à 7, **caractérisé en ce que** l'on étire un verre plat d'un bain de verre en fusion.

11. Procédé de façonnage à chaud selon au moins l'une des revendications 1 à 10, **caractérisé en ce que** le corps en verre est façonné à partir d'un bain de verre en fusion dont la viscosité est comprise dans la plage de 10⁴ à 10⁵ dPa.s.

12. Procédé de façonnage à chaud selon au moins l'une des revendications 1 à 11, **caractérisé en ce que** le corps en verre est façonné à partir d'un bain de verre en fusion chauffé à plus de 1 000°C et en particulier chauffé à plus de 1 200°C.

13. Procédé de façonnage à chaud selon au moins l'une des revendications 1 à 12, **caractérisé en ce que** le corps en verre est façonné à partir d'un bain de fusion de verre au borosilicate, de verre neutre ou de verre au silicate d'alumine.

14. Procédé de façonnage à chaud selon au moins l'une des revendications 1 à 12, **caractérisé en ce que** le corps en verre est façonné à partir d'un bain de fusion de verre dont la composition (en % en poids sur base des oxydes) est la suivante :
| | |
|---|---|
| SiO₂ | 40 - 75 |
| Al₂O₃ | 10 - 27 |
| B₂O₃ | 0 - 15 |
| MgO | 0 - 10 |
| CaO | 0 - 12 |
| SrO | 0 - 12 |
| BaO | 0 - 30 |
| ZnO | 0 - 10 |
| ZrO₂ | 0 - 5 |
| Li₂O + Na₂O + K₂O | 0 - 7 |
| TiO₂ | 0 - 5,5 |
| P₂O₅ | 0 - 9,0 |
ainsi gu'éventuellement les quantités habituelles d'agents d'affinage et de composants colorants.

15. Procédé de façonnage à chaud selon au moins l'une des revendications 1 à 12, **caractérisé en ce que** les corps en verre sont façonnés à partir d'un bain de fusion de verre dont la composition (en % en poids sur base des oxydes) est la suivante :
| | |
|---|---|
| SiO₂ | 60 - 80 |
| Al₂O₃ | 2 - 10 |
| B₂O₃ | 5 - 20 |
| MgO | 0 - 8 |
| CaO | 0 - 12 |
| SrO | 0 - 8 |
| BaO | 0 - 12 |
| ZnO | 0 - 10 |
| ZrO₂ | 0 - 5 |
| Li₂O + Na₂O + K₂O | 2 - 12 |
ainsi qu'éventuellement les quantités habituelles d'agents d'affinage et de composants colorants.

16. Utilisation du corps en verre préparé par le procédé de façonnage à chaud selon au moins l'une des revendications 1 à 15 pour la fabrication d'ampoules de lampes à halogène.

17. Utilisation du corps en verre fabriqué selon le procédé de façonnage à chaud selon au moins l'une des revendications 1 à 15 pour la fabrication de récipients qui servent d'emballage primaire pour des produits pharmaceutiques.
